# EUROPEAN PATENT APPLICATION

(11) **EP 3 722 897 A1**
(43) Date of publication of application: **14.10.2020**
(21) Application number: 20166066.9
(22) Date of filing: 26.03.2020
(51) Int. Cl.: G05B 19/042

(54) **CONTROL HIVE ARCHITECTURE ENGINEERING EFFICIENCY FOR AN INDUSTRIAL AUTOMATION SYSTEM**

(30) Priority: 07.04.2019 US 201916377237
(71) Applicant: Honeywell International Inc., Morris Plains, NJ 07950 (US)
(72) Inventor: MCLAUGHLIN, Paul F., Morris Plains, NJ New Jersey 07950 (US); URSO, Jason Thomas, Morris Plains, NJ New Jersey 07950 (US); SCHREDER, James Michael, Morris Plains, NJ New Jersey 07950 (US)
(74) Representative: Dennemeyer & Associates S.A.

(57) **Abstract**

A system is provided with a group of controllers configured into a hive, wherein the hive is configured to receive control strategies and to assign a particular control strategy to a controller within the hive that is a best fit for a particular control strategy and wherein each controller communicates to a plurality of input/output (I/O) interfaces.

## Description

### Field of the Invention

The field of this invention is industrial automation, and in particular a system for an industrial automation system having controllers treated as a composite resource.

### Background of the Invention

Processing facilities, or industrial plants, are typically managed using industrial automation systems. Example processing facilities include manufacturing plants, chemical plants, crude oil refineries, and ore processing plants. Among other things, industrial automation systems often manage the use of industrial equipment in the processing facilities.

### Summary of the Invention

A system is provided in which a group of controllers are configured into a hive. The hive is configured to receive control strategies to the hive as a whole which then assigns a particular control strategy to a controller within the hive that is determined to be the best fit for a particular control strategy. The controllers, either via the I/O mesh or individually, communicate to a plurality of input/output interfaces. The control strategies that are used are selected from an initial unassigned state, assigned, loaded and activated. There are a number of factors that are customizable that affect the assignment of strategies including but not limited to I/O references, peer controller references, resource usage such as the availability of resources in each assigned controller within the hive. There may be more than one hive in a system and in some instances there may still be individual controllers assigned to functions as in prior art systems. In designating controllers to a hive, this may be done using an engineering tool.

### Brief Description of the Drawings

Figure 1 illustrates an industrial process control and automation system.
Figure 2 shows an exemplary mesh topology at the channel level of the I/O modules.
Figure 3 shows an exemplary system employing a controller hive.
Figure 4 shows a flow chart of the process of setting up a controller hive with a controller software application.

### Detailed Description

Industrial automation is an important feature of today's industrial processing plants. There is a need for industrial automation systems to continually provide greater flexibility in the implementation and operation of industrial automation systems.

In this invention, it has been found that configuring a group or set of controllers into a controller hive provided an enhanced result compared to prior art systems where each controller is managed on an individual basis. The controllers are treated as a composite resource instead of independent resources. However, in some instances, it may be determined to be desirable to still have an individual controller used for a specific purpose while other controllers are part of the controller hive. The controller hive serves to decouple control from the system. Application engineers are able to view control independent from system infrastructure. There is access by engineering to determine which controllers are included in the hive and then to communicate instructions to the hive for dissemination within the hive. Then is in prior art systems, there is access to the controllers by operations and maintenance functions. The system is able to assign control to the appropriate platform. The use of the hive allows for capacity optimization since the system finds the best fit and assigns the control strategy to the particular controller that is determined best able to execute that strategy. Control strategies are either assigned or unassigned to the control hive. Smart assignment by the hive is based on several factors including, but not limited to I/O references, peer controller references, resource usage/availability of controller in hive (CPU, memory, network connections), resource balancing within the hive. The factors may be customizable and the determination as to the factors will be used in the decision process. The particular controllers within a particular hive may be modified with controllers either added or removed from the hive at some time after initial creation of the hive. This provides a control capacity scalability based on actual system requirements.

The project engineering workflow will differ from the prior art that assigns control strategies to individual controllers. In the present invention, the controllers are assigned by the hive instead of being individually assigned. The engineering tool that makes the assignments of control strategies to the hive contains the assignment rules.

While there are several different alternative processes for creating and configuring a controller hive, one process would involve using a an engineering tool that provides for determining control of the controllers in a particular plant or section of a plant. This software program has a menu that includes controllers as one of the options. When it is first determined that using a controller hive would be appropriate, a name is chosen for each hive and decision made as to the number of controllers to be in the hive. Then, particular controllers are assigned to each named hive. Subsequently, whenever the operator is accessing the software program, the controller hives will be shown. However, since in operation of the invention, the purpose is to send instructions to a hive instead of to an individual controller, there will be shown on the screen the hive instead of a breakdown of each individual controller. It is anticipated that in certain embodiments of the invention, the previously assigned function of each controller will not be lost when that controller is assigned to a hive. The operator will be able to navigate to a hive configuration that will show the particular hive configuration at that point in time.

In addition to being able to create a controller hive through a controller software module that would allow for selection of controllers to include in the hive on an individual basis, the system may involve employing a bulk automatic tool that builds multiple hives. Particular controller strategies are selected and designated to be automatically assigned to the hive. When the user or automatic controls select a particular hive and selects automatic assignment, the system will run an automatic assignment algorithm and assign to any controller within the hive based upon the rules that have been defined. These rules will be based upon a number of factors that are selected from the following non-exclusive list. These include I/O references, peer controller references, resource usage and the availability of controllers in the hive based on factors such as available CPU, memory and network connections as well as A report may then be generated that indicates which function is assigned to which controller as well as an indication as to success in assignment.

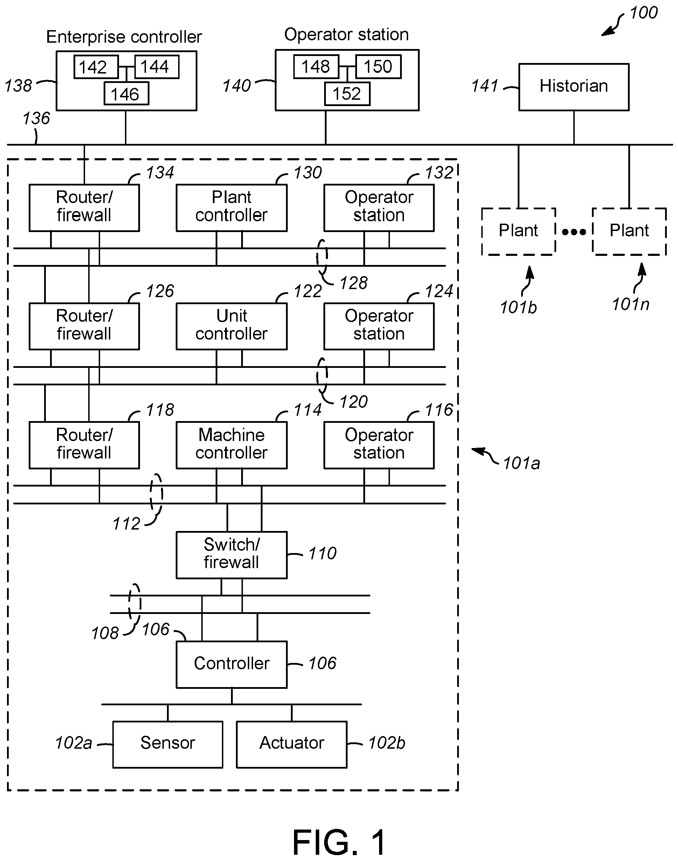

FIG. 1 illustrates an example industrial automation system 100 according to this disclosure. As shown in FIG. 1, the system 100 includes various components that facilitate production or processing of at least one product or other material. For instance, the system 100 is used here to facilitate control over components in one or multiple plants 101 *a*-101 *n.* Each plant 101 *a*-101 *n* represents one or more processing facilities (or one or more portions thereof), such as one or more manufacturing facilities for producing at least one product or other material. In general, each plant 101 *a*-101 *n* may implement one or more processes and can individually or collectively be referred to as a process system. A process system generally represents any system or portion thereof configured to process one or more products or other materials in some manner.

In FIG. 1, the system 100 is implemented using the Purdue model of process control. In the Purdue model, "Level 0" may include one or more sensors 102 *a* and one or more actuators 102 *b*. The sensors 102 *a* and actuators 102 *b* represent components in a process system that may perform any of a wide variety of functions. For example, the sensors 102 *a* could measure a wide variety of characteristics in the process system, such as temperature, pressure, or flow rate. Also, the actuators 102 *b* could alter a wide variety of characteristics in the process system. The sensors 102 *a* and actuators 102 *b* could represent any other or additional components in any suitable process system. Each of the sensors 102 *a* includes any suitable structure for measuring one or more characteristics in a process system. Each of the actuators 102 *b* includes any suitable structure for operating on or affecting one or more conditions in a process system. The sensors and actuators may be generally referred to as field devices.

At least one network 104 is coupled to the sensors 102 a and actuators 102 *b.* The network 104 facilitates interaction with the sensors 102 a and actuators 102 *b.* For example, the network 104 could transport measurement data from the sensors 102 *a* and provide control signals to the actuators 102 *b.* The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers 106, which are coupled to the network 104. Among other things, each controller 106 may use the measurements from one or more sensors 102 a to control the operation of one or more actuators 102 *b*. For example, a controller 106 could receive measurement data from one or more sensors 102 *a* and use the measurement data to generate control signals for one or more actuators 102 *b*. Multiple controllers 106 could also operate in redundant configurations, such as when one controller 106 operates as a primary controller while another controller 106 operates as a backup controller (which synchronizes with the primary controller and can take over for the primary controller in the event of a fault with the primary controller). Each controller 106 includes any suitable structure for interacting with one or more sensors 102 *a* and controlling one or more actuators 102 *b*. Each controller 106 could, for example, represent a multivariable controller, such as a Robust Multivariable Predictive Control Technology (RMPCT) controller or other type of controller implementing model predictive control (MPC) or other advanced predictive control (APC). As a particular example, each controller 106 could represent a computing device running a real-time operating system.

Two networks 108 are coupled to the controllers 106. The networks 108 facilitate interaction with the controllers 106, such as by transporting data to and from the controllers 106. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106, sensors 102 *a*, and actuators 102 *b*, which could be associated with a particular piece of industrial equipment (such as a boiler or other machine). For example, the machine-level controllers 114 could log information collected or generated by the controllers 106, such as measurement data from the sensors 102 *a* or control signals for the actuators 102 *b.* The machine-level controllers 114 could also execute applications that control the operation of the controllers 106, thereby controlling the operation of the actuators 102 *b.* In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors 102 *a*, and actuators 102 *b*).

One or more operator stations 116 are coupled to the networks 112. The operator stations 116 represent computing or communication devices providing user access to the machine-level controllers 114, which could then provide user access to the controllers 106 (and possibly the sensors 102 *a* and actuators 102 *b*)*.* As particular examples, the operator stations 116 could allow users to review the operational history of the sensors 102 *a* and actuators 102 *b* using information collected by the controllers 106 and/or the machine-level controllers 114. The operator stations 116 could also allow the users to adjust the operation of the sensors 102 *a*, actuators 102 *b*, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as a pair of Ethernet networks or an FTE network.

In the Purdue model, "Level 3" may include one or more unit-level controllers 122coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106, sensors 102 *a*, and actuators 102*b*).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130coupled to the networks 128. Each plant-level controller 130 is typically associated with one of the plants 101 *a*-101 *n,* which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101 *a*-101 *n* and to control various aspects of the plants 101 *a*-101 *n.* The enterprise-level controllers 138 can also perform various functions to support the operation and control of components in the plants 101 *a*-101 *n.* As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101 *a* is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 141 can be coupled to the network 136. The historian 141 could represent a component that stores various information about the system 100. The historian 141 could, for instance, store information used during production scheduling and optimization. The historian 141 represents any suitable structure for storing and facilitating retrieval of information. Although shown as a single centralized component coupled to the network 136, the historian 141 could be located elsewhere in the system 100, or multiple historians could be distributed in different locations in the system 100.

In particular embodiments, the various controllers and operator stations in FIG. 1 may represent computing devices. For example, each of the controllers could include one or more processing devices 142 and one or more memories 144 for storing instructions and data used, generated, or collected by the processing device(s) 142. Each of the controllers could also include at least one network interface 146, such as one or more Ethernet interfaces or wireless transceivers. Also, each of the operator stations could include one or more processing devices 148 and one or more memories 150 for storing instructions and data used, generated, or collected by the processing device(s) 148. Each of the operator stations could also include at least one network interface 152, such as one or more Ethernet interfaces or wireless transceivers.

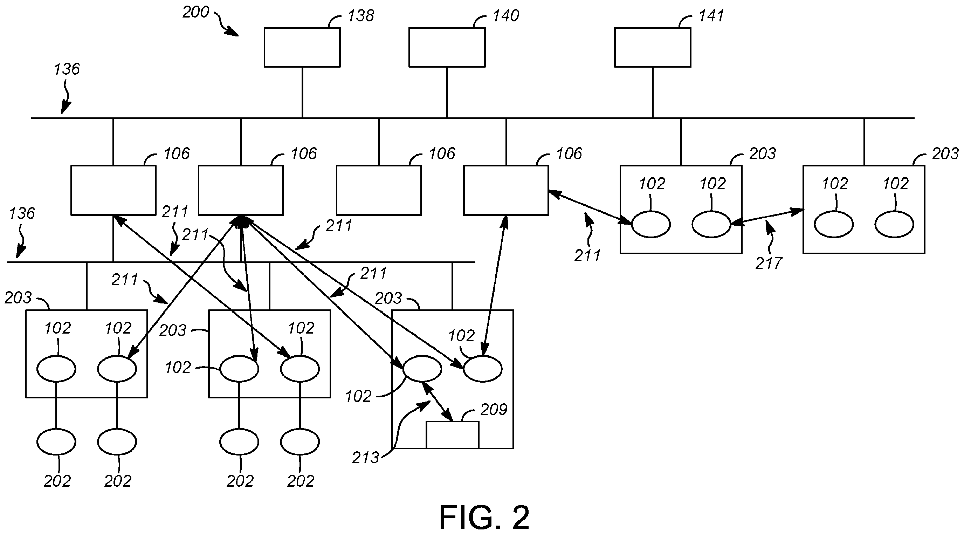

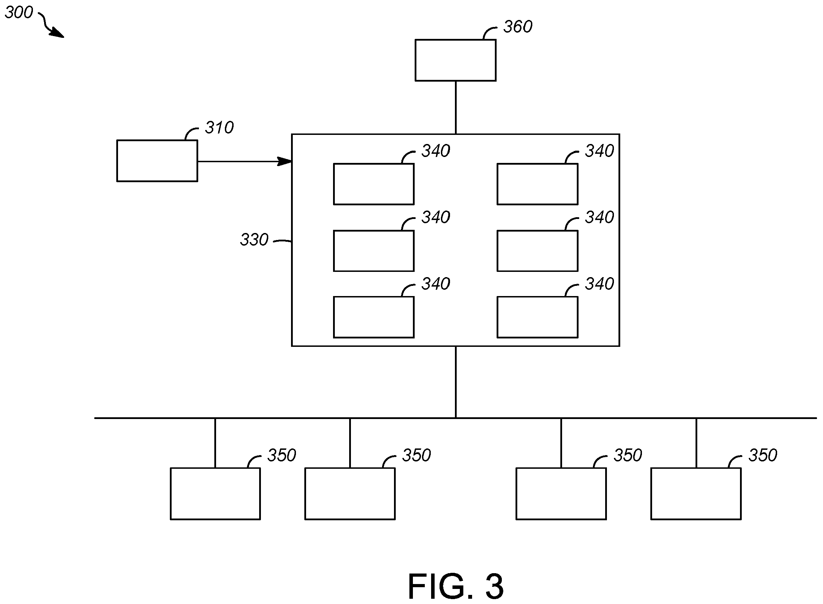

In some embodiments of the invention, a mesh topology may be employed at the channel level of the I/O modules. An exemplary mesh topology at the channel level of the I/O modules is shown in FIG. 2. Enterprise controller 138, operator station 140, historian 141, network 136, and controllers 106 are as described above with reference to FIG. 1. I/O modules 203 have multiple channels 102 which are connected to field devices 102a and 102b of FIG. 1. One I/O module 203 is shown as further having local control 209. For simplicity, in FIG. 2 I/O interfaces are not shown as separate from the I/O modules but shown as a unit. FIG. 3 shows the relationship of the I/O modules and the I/O interfaces. It is understood that multiple I/O modules may be associated with a single I/O interface, see FIG. 3. A I/O network 207 is shown in addition to network 136. I/O network 207 is a private network. A number of controllers 203 are connected to I/O network 207, while other controllers 203 are connected to network 136.

Typical field devices allow for monitoring manufacturing processes, such as physical attributes, such as temperatures, pressures, flows, etc., as well as providing control over a process, such as opening/closing valves, increasing/relieving pressures, turning up/down heating or cooling units, etc. There is a need to centralize control and information gathering to improve plant efficiency. Each process in the plant has one or more input characteristics, i.e. control features, and one or more output characteristics, i.e. process conditions.

Some industrial automation systems use a distributed control system (DCS) which is a system of sensors, controllers and associated computers that are distributed throughout an industrial plant. DCS systems use methods such as publish/subscribe and request/response to move data from controllers to client servers and applications at a supervisory level. The DCS provides automated decisions based on processing the data in real time or as modified by users in response to analysis of data collected from running processes.

A limitation of many present industrial automation systems, including DSC systems, is that each controller is assigned to a specific input/output module and the set of channels and field devices associated with the specific input/output module. Sets of channels and associated field devices are fixed by the I/O module's type, the physical location of the I/O module, or the network location of the I/O module. Flexibility is therefore limited. The present disclosure removes that limitation.

FIG. 2 shows that in an embodiment of the invention, the relationship between one controller and a set of I/O channels is no longer a bound relationship of one controller to a specific set of I/O channels defined by one I/O module, but instead shows the I/O channels of multiple I/O modules to be meshed to a set of control nodes, i.e., controllers. The I/O electronics have been decoupled from one specific controller. Specifically, FIG. 2 shows the I/O modules each having a plurality of channels at a channel level of the I/O module, where the channels of all the I/O modules are connected in a mesh topology. In Fig. 2, not only have the I/O electronics been decoupled from one specific controller, but with the mesh topology at the channel level of the I/O modules, multiple controllers may be related to a single I/O module and the channels within. Each of the multiple of controllers may be connected to one or more channels of a single I/O module.

The I/O mesh is particularly valuable for engineering efficiency when Universal I/O Modules available from Honeywell Process Solutions are employed. Using technology such as that of the Universal I/O Modules, channel types are software configured. The types available to chose from include analog input, analog output, digital input, and digital output. Suitable Universal I/O is described in US2005/0278144.

Multiple advantages are achieved by employing a mesh architecture to the channels of the I/O modules. I/O modules may be located geographically close to the field devices without regard to which specific controller will use those I/O signals and equipment. This advantage supports the current need to simplify designs by removing field junction boxes and deploying more I/O in the field as compared to traditional Control Center and remote instrument enclosure (RIE) deployments.

Another advantage is the ability to use standard Ethernet as a remoting medium, including switched and ring topologies. Employing standard Ethernet technology may allow for greater flexibility, greater stability and reliability, greater security, greater scalability. Further Ethernet connections provide for higher security at the I/O level and is ISA99 certified. However, the disclosure is not limited to Ethernet technology. Other remoting mediums may be employed in combination with Ethernet technology or instead of Ethernet technology.

At a high-level view, FIG. 2 comprises a system 200 that includes a plurality of I/O modules 203 wherein each I/O module is connected to a plurality of field devices 202 though channels 102 of the I/O modules 203. A channel provides one datum of an industrial process. Process data from field devices or process control strategy instructions to field devices are referred to herein as channels. Channels 102 are configured in a mesh topology. FIG 2. Shows representative field devices 202 although each I/O module 203 may be connected through channels 102 to a plurality of field devices 202 even if not shown. Hundreds of field devices 202 may be connected to I/O module 203 through channels 102. Field devices 202, are devices for generating process information, or for actuating process units through control of valves, regulators, or other processing devices. Exemplary field devices 202 can be sensors, actuators, or other processing devices, such as valves, flow controllers and other equipment. The mesh topology allows for signals to and from the channels, and therefore to and from the field devices, to reach a necessary controller regardless of the I/O module a channel is associated with. Multiple controllers may be controlling outputs of different channels that belong to the same I/O module. Similarly, Multiple controllers may be controlling inputs of different channels that belong to the same I/O module. Connections may be though, for example, Ethernet technology or wireless technology.

System 200 further includes a plurality of controllers 106. Each controller 106 is configured to receive signals from and transmit signals to any one of the plurality of channels 102 within the plurality of I/O modules 203, wherein the channels 102 are connected in a mesh topology. Just as each channel 102 represents a datum of a process, that datum is destined for a specific controller 106. With the channels 102 configured in a mesh topology, the specific datum in a specific channel can be connected to the proper specific controller 106 regardless of which I/O module the channel resides in. In other words, data collected from field devices via channels is available to any controller though the mesh topology of the channels. Similarly, signals or instructions from the controller may be available to any channel though the mesh topology of the channels.

Each controller 106 generates an information stream for further processing. In some embodiments the controllers 106 may be arranged with electronic interconnection topologies, such as through ethernet technology. Suitable topologies include, but are not limited to, a ring topology and a star topology. The ring topology comprises an interconnection of the controllers wherein each controller is in communication with two other controllers. A star topology is wherein one or more controllers are interconnected with the remaining controllers. When employing these topologies, it is not required for each controller to be interconnected to all other controllers. In one embodiment each controller is connected to at least one or two other controllers. Using controller topologies such as these, controllers can also share information between each other. Exemplary controllers include an application control system, a field device manager, a remote terminal unit, embedded controllers, programmable logic controllers, virtual nodes, or another device for receiving information and sending instructions to a field device 202. The controller 106 can be operated through a human machine interface, or through a preprogrammed automated system.

System 200 further includes network 136, which can be a supervisory control network, for directing information streams to and from the controllers 106. Network 136 receives the information stream from the controllers 106 and transmits control strategy information to the controllers 106. When a requesting node needs a datum from a responding node, it issues a request for the datum across the network and the responding node then returns the datum back across the network. Network 136 as a supervisory control network comprises a supervisory control computer and interfacing hardware to enable communication and control between a client server and the industrial plant.

System 200 can further include a data center housing enterprise controller 138, operator station 140, and/or historian 141 for receiving and storing the information stream from the network 136. Sorted data can be later retrieved for analysis. Data storage can be a local storage, a remote storage, or a cloud storage.

One or more of I/O modules 203 or I/O interfaces may be capable of executing level-1 basic control functions. Basic control functions interact with I/O channels and the I/O interface can mesh with other controllers at the same time. Local control and the I/O interface mesh can both coexist. The local control function is shown in FIG.2 as local control 209.

With the mesh topology of the channels of the I/O modules, Fig. 2 shows connections between controllers 106 and the channels 102 of I/O modules 203 may occur in multiple different ways. For example, connections 211 show controllers 106 connected to different channels 102 of different I/O modules 203. One controller 106 may be connected to multiple channels 102 within the same I/O module 203. I/O modules interface I/O to the system over a network. The network may be, for example, a supervisory network or a private I/O network. A controller connected to network 136 may be connected to a channel 102 of an I/O module also connected to network 136. A controller connected to network 136 may be connected to a channel 102 of an I/O module connected to I/O network 207 via connection 215. An I/O module 203 having channel 102 and local control 209 may have connection 213 between channel 102 and local control 209 of I/O module 203.

I/O modules 203 provide associated channels 102 with a configured fault state when communication to the upstream controller is lost. Outputs in particular are more sensitive to faults. Previously, where one controller is assigned to one specific I/O module, the fault handling is at the I/O module level. If communication is lost to the controller, all channels of the I/O module would be considered in a failed state, i.e., detecting a communication failure, and engage the failsafe handling protocol as established by the configured fault state. However, with the channels configured in a mesh topology, faults are detected and handled on a per-channel basis and not on an I/O module basis. So, if communications are lost to only one of the upstream controllers, then only those channels of an I/O module in communication with the specific "lost" controller would be considered in a failed state, or faulted, and engage the failsafe fault handling protocol. Other channels of the I/O module would continue normal operational. If a channel does not have an associated control algorithm, such as when communication to a controller is lost, a safety action may be automatically prescribed by the configured fault state to move the field device into a failsafe state. For example, if a fuel valve field device loses communication with the controller, the fuel vale may be automatically shut off. Advantageously, with the mesh topology of the channels 102, the fault handling is at the channel level and not the I/O module level.

Fig. 3 shows system 300 with a controller hive 330 that includes a number of controllers 340. The IO mesh and the properties of the IO mesh of unbinding and decoupling IO from the controllers that is described above is an enabler of the controller hive features that are described. An engineering tool shown at 310 will send assignments to controller hive 330 instead of such information being sent to individual controllers 340. Controller hive 330 will then communicate with I/O devices 350 which may be arranged in a mesh as described above or may be communicated with on an individual basis. Operations and maintenance 360 will have access to the controller hive as is normal in prior art plants.

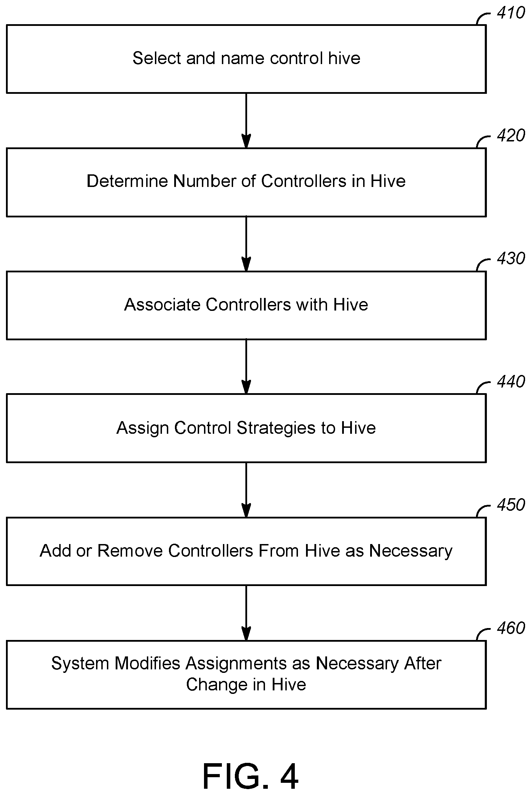

Fig. 4 shows the steps that take place in the creation and configuration of a controller hive. The steps in sequence are select and name controller hive 410, determine the number of controllers in controller hive 420, associate group of controllers with controller hive 430, assign control strategies 440 to hive, add or remove controllers from hive as necessary 450. The controller hive continues to function after being defined and assigned. As noted in Fig. 4, controllers may be added to the controller hive from time to time as well as controllers removed from the hive.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and
scope of this disclosure, as defined by the following claims.

## Claims

1. A system comprising a group of controllers configured into a hive, wherein the hive is configured to receive control strategies and to assign a particular control strategy to a controller within said hive that is a best fit for a particular control strategy and wherein each controller communicates to a plurality of input/output (I/O) interfaces.

2. The system of claim 1 wherein said control strategy changes from an unassigned state to an assigned state.

3. The system of claim 1 wherein said assignment of said control strategy is based on a set of rules.

4. The system of claim 1 wherein said assignment is affected by factors related to the properties and requirements of the control strategies including I/O references and peer resources.

5. The system of claim 1 wherein said assignment is affected by factors related to a capability of resources within the hive.

6. The system of claim 1 wherein said assignment is affected by a factor selected from the group consisting of I/O references, peer controller references, resource usage including the availability of resources in each of the controllers within the hive and other factors that affect the assignment.

7. The system of claim 1 comprising more than one hive.

8. The system of claim 1 wherein the controller hive is configured to be assigned control strategies by an engineering software application.

9. A method of operating a control system comprising configuring a group of controllers into a hive and assigning control strategies to the hive.

10. The method of claim 9 wherein said control strategy is assigned based upon one or more factors selected from the group consisting of I/O references, peer controller references, resource usage including the availability of resources in each of the controllers within the hive and other factors related to said assignment.
